# FASCICULE DE BREVET EUROPEEN

(11) **EP 3 142 872 B1**
(45) Date de publication et mention de la délivrance du brevet: **31.01.2018**
(21) Numéro de dépôt: 15725826.0
(22) Date de dépôt: 06.05.2015
(51) Int. Cl.: B60C 23/00, F16K 31/126, F16K 15/10

(54) **DISPOSITIF DE GONFLAGE-DEGONFLAGE AUTOMATIQUE D'UNE CAPACITE DE CONFINEMENT D'UN FLUIDE GAZEUX SOUS PRESSION**
VORRICHTUNG ZUR AUTOMATISCHEN INFLATION-DEFLATION EINER EINSCHLUSSKAPAZITÄT FÜR EINE GASFÖRMIGE FLÜSSIGKEIT UNTER DRUCK
DEVICE FOR AUTOMATIC INFLATION-DEFLATION OF A CONTAINMENT CAPACITY FOR A PRESSURISED GASEOUS FLUID

(30) Priorité: 13.05.2014 FR 1454228
(43) Date de publication de la demande: 22.03.2017
(73) Titulaire: Teleflow, 42300 Mably (FR)
(72) Inventeur: Fazekas, Stéphane, 42640 Noailly (FR)
(74) Mandataire: Cabinet Laurent & Charras
(86) Numéro de dépôt international: PCT/FR2015/051199
(87) Numéro de publication internationale: WO 2015/173493

(56) Documents cités:
- EP-A1- 0 511 135
- US-A- 4 744 399

## Description

### DOMAINE TECHNIQUE

La présente invention concerne le domaine technique des dispositifs permettant un gonflage-dégonflage automatique d'une capacité, par exemple d'un pneumatique d'une roue de véhicule, à partir d'un fluide gazeux sous pression relative.

En effet, il est parfois utile de pouvoir gonfler ou dégonfler à distance les pneumatiques des roues d'un véhicule, de manière à pouvoir adapter la portance de ces derniers en fonction de l'état du sol sur lequel le véhicule se déplace.

Ceci est, en particulier, le cas des véhicules tous terrains qui doivent pouvoir progresser dans les meilleures conditions, indifféremment, sur des sols durs, caillouteux, meubles, se succédant, sans que le conducteur soit astreint à interrompre la progression pour apporter, de façon manuelle et lorsque le véhicule est à l'arrêt, une correction appropriée de la pression de gonflage des différents pneumatiques.

Cette application n'est donnée qu'à titre d'exemple car, dans de nombreux domaines, il s'avère également utile, sinon nécessaire, de pouvoir adapter à distance la pression de gonflage d'une capacité quelconque de confinement d'un fluide gazeux sous pression relative.

### ETAT ANTERIEUR DE LA TECHNIQUE

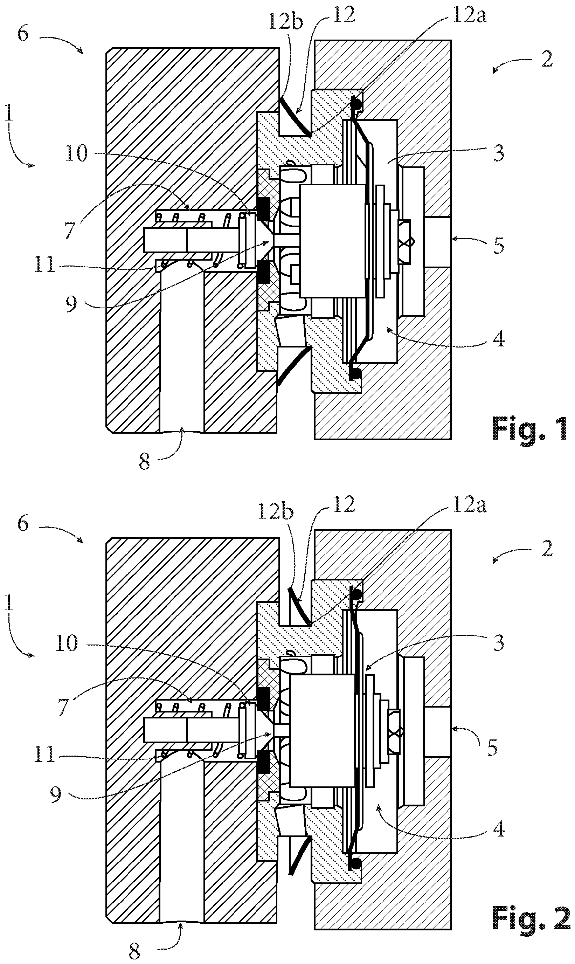

Pour résoudre le problème ci-dessus, il est connu de l'état de la technique d'utiliser un dispositif (1) de gonflage-dégonflage automatique d'une capacité. En référence aux figures 1 et 2 illustrant un tel dispositif (1) en coupe longitudinale, celui-ci comprend :
- une première partie (2) comprenant un système de pilotage (3) monté coulissant dans une première chambre (4) sous l'effet de l'injection d'un fluide gazeux par un orifice d'admission (5) ;
- une deuxième partie (6), accouplée à la première partie (2), et définissant une deuxième chambre (7) avec un orifice de gonflage-dégonflage (8) destiné à communiquer avec la capacité de confinement (non représentée), et un orifice d'échappement (9) débouchant entre lesdites première et deuxième parties (2, 6), ladite deuxième partie (6) comprenant un clapet (10) assujetti au système de pilotage (3) de manière à adopter une position de repos dans laquelle il obture l'orifice d'échappement (9), et une position de dégonflage, à l'encontre d'un organe élastique de rappel (11) et lorsque le système de pilotage (3) coulisse, dans laquelle il libère l'orifice d'échappement (9).

Ce dispositif permet, par l'injection d'un fluide gazeux, d'entrainer le coulissement du système de pilotage et donc de piloter le clapet pour libérer l'orifice d'échappement pour le dégonflage de la capacité de confinement.

Ce dispositif peut, par exemple, être monté sur des véhicules tous terrains, lesquels circulent dans des flaques d'eau, dans de la poussière, et/ou de la boue. Les projections de poussières, boue, eau peuvent pénétrer dans le dispositif de gonflage-dégonflage et l'endommager.

Pour pallier à cet inconvénient, il est connu de l'état de la technique d'intégrer une rondelle de protection (12). Cette rondelle (12), de préférence en matériau élastomère, est montée entre les première et deuxième parties (2, 6) et autour de l'orifice d'échappement (9) pour le protéger contre des agents atmosphériques extérieurs, tels que boue, eau, poussières, ou tout autre élément indésirable pouvant nuire au fonctionnement du dispositif.

Plus précisément, cette rondelle (12) comprend une forme en tronc de cône, dont la petite base (12a), à savoir le périmètre interne de la rondelle (12), est en appui étanche contre la première partie (2), et la grande base (12b), à savoir le périmètre externe de la rondelle (12), est en appui étanche contre la deuxième partie (6).

Cette rondelle (12) permet de maintenir l'étanchéité du dispositif (1) et d'assurer une protection optimale contre les projections de boue, eau, poussière, ou tout autre élément.

Cependant, cette solution pour assurer l'étanchéité présente un inconvénient majeur. En effet, lorsque la capacité de confinement est dégonflée, c'est-à-dire lorsque du fluide gazeux, notamment de l'air, est expulsé du dispositif, et s'échappe par l'orifice d'échappement, la rondelle en matériau élastomère est repliée pour laisser l'air s'échapper entre ladite rondelle et la deuxième partie. En d'autres termes, la grande base du tronc de cône est repoussée en direction de la petite base. La grande base, ayant perdu son appui, se trouve dans le vide. En fonction de la pression du fluide gazeux qui est libéré, la rondelle en matériau élastomère entre en vibration ce qui provoque une nuisance sonore non négligeable.

Ces nuisances sonores peuvent être relativement gênantes dans certains domaines, notamment lorsqu'il s'agit d'équiper des véhicules devant faire preuve d'une certaine furtivité, par exemple pour des véhicules militaires.

Les documents US 4 744 399 et EP 0 511 135 décrivent d'autres dispositifs de gonflage-dégonflage définissant l'état général de la technique, non considérés comme particulièrement pertinents.

### EXPOSE DE L'INVENTION

L'un des buts de l'invention est donc de remédier au moins à l'inconvénient précité en proposant un dispositif de gonflage-dégonflage d'une capacité qui soit protégé contre des agents atmosphériques extérieurs, et dont la nuisance sonore engendrée par son fonctionnement est diminuée pour ne plus être gênante.

Un autre objectif de l'invention est de fournir un tel dispositif qui soit de conception simple, sûre et rationnelle.

A cet effet, il a donc été mis au point un dispositif de gonflage-dégonflage automatique d'une capacité de confinement d'un fluide gazeux sous pression, du type comprenant :
- une partie comprenant un orifice d'admission d'un fluide gazeux sous pression, et une partie comprenant, un orifice de gonflage-dégonflage destiné à communiquer avec la capacité de confinement, et un orifice d'échappement débouchant entre lesdites deux parties ;
- un système de pilotage à clapet pour des opérations de gonflage-dégonflage en tant que telles ;
- une rondelle élastique montée entre les deux parties et autour de l'orifice d'échappement pour le protéger contre des agents atmosphériques extérieurs.

Conformément à l'invention, et pour assurer une étanchéité optimale, tout en réduisant les nuisances sonores dues au fonctionnement du dispositif, l'une des parties comprend des agencements de réception de la rondelle aptes à autoriser ladite rondelle à se déformer élastiquement, sous l'effet d'une pression d'un fluide gazeux s'échappant à travers l'orifice d'échappement, pour se libérer d'un appui facial réalisé par une protubérance annulaire que comprend l'autre partie, et créer un passage d'échappement de fluide entre ladite protubérance annulaire et ladite rondelle.

De cette manière, lorsque la capacité de confinement est dégonflée, c'est-à-dire lorsque du fluide gazeux s'échappe par l'orifice d'échappement, celui-ci contraint la rondelle de protection à se déformer élastiquement, et notamment à se courber dans les agencements de réception. De cette manière le fluide sous pression est apte à s'échapper par un passage libéré entre ladite rondelle et la saille annulaire. Par le terme « courber », on entend que la surface de la rondelle, définie entre le périmètre interne et le périmètre externe, prend une forme concave par rapport aux agencements de réception. Ainsi, la rondelle n'entre pas en vibration et ne génère aucune nuisance sonore non désirée. De plus, lors du dégonflage, le mouvement de la rondelle consiste uniquement en un mouvement de courbure de sorte qu'aucune partie de la rondelle ne vient percuter une quelconque partie du dispositif. Le dispositif est de conception simple, sûre et rationnelle

Selon une forme de réalisation particulière, les agencements de réception de la rondelle sont aptes à former, d'un premier côté de la rondelle, des zones d'appuis circonférentiels aux niveaux des périmètres interne et externe de ladite rondelle.

L'appui circonférentiel sur les périmètres interne et externe de la rondelle, en combinaison avec la pression du fluide gazeux, empêche davantage la rondelle d'entrer en vibration et de générer une nuisance sonore non désirée.

De préférence, et pour assurer une meilleure étanchéité, en position de repos, la protubérance annulaire est en appui forcé contre la rondelle de protection, contraignant cette dernière à se déformer élastiquement, notamment à se courber. Lors du dégonflage, le fluide gazeux sous pression qui s'échappe par l'orifice d'échappement contraint la rondelle à se courber davantage pour libérer le passage d'échappement.

Selon une forme de réalisation particulière, les agencements de réception de la rondelle se présentent sous la forme d'une gorge profilée.

Avantageusement, la gorge de réception comprend un profil transversal en forme de « V ». Ainsi, la zone externe de la gorge, à savoir la branche externe du « V » permet de réaliser un appui circonférentiel au niveau du périmètre externe de la rondelle, tandis que la zone interne de la gorge, à savoir la branche interne du « V » permet de réaliser un appui circonférentiel au niveau du périmètre interne de la rondelle.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique en coupe longitudinale d'un dispositif de gonflage-dégonflage de l'état de la technique, et en position de repos ;
- la figure 2 est une représentation schématique similaire à celle de la figure 1, le dispositif état en position de dégonflage ;
- la figure 3 est une représentation schématique en coupe longitudinale d'un dispositif de gonflage-dégonflage selon l'invention et en position de repos ;
- la figure 4 est une représentation schématique similaire à celle de la figure 3, le dispositif étant en position de dégonflage.

### EXPOSE DETAILLE DE L'INVENTION

Par simplification, les parties ou éléments qui se retrouvent de manière identique ou similaire dans l'invention décrite ci-dessous, et dans l'état de la technique illustré aux figures 1 et 2, seront identifiés par les mêmes références numériques.

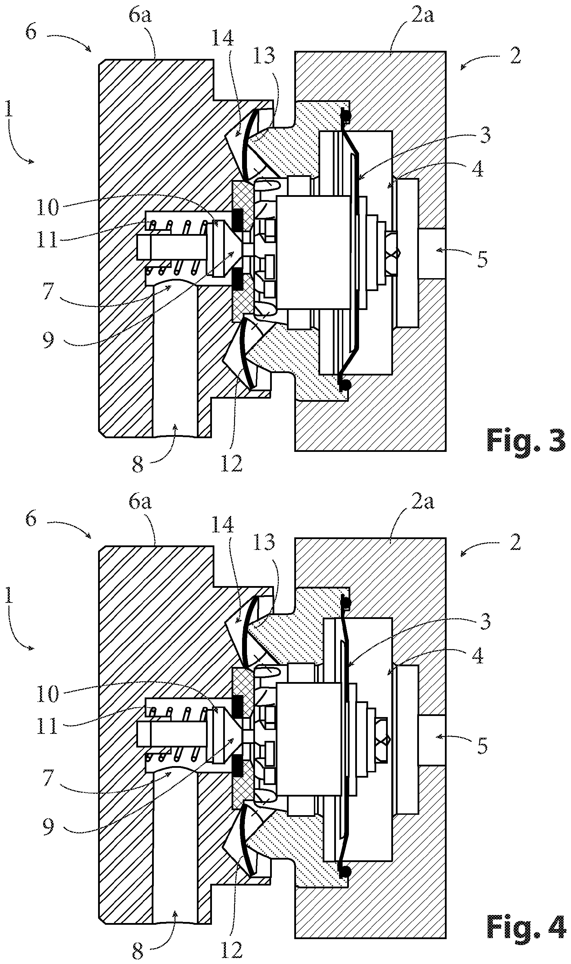

Les figures 2 et 3 représentent en coupe longitudinale un dispositif (1) pneumatique, piloté et étanche, de gonflage-dégonflage d'une capacité de confinement, tel qu'un pneumatique de roue de véhicule par exemple. Le dispositif (1) comprend, d'une manière bien connue, deux parties définissant deux chambres.

La première partie (2) se présente sous la forme d'un corps creux (2a), par exemple cylindrique. La première chambre (4) définie à l'intérieur du corps creux (2a) communique avec l'extérieur du dispositif (1) par un orifice d'admission (5) ménagé dans l'une des bases circulaires dudit corps creux cylindrique (2a). Cet orifice d'admission (5) est destiné à recevoir des moyens d'injection (non représentés) d'un fluide gazeux sous pression, par exemple de l'air comprimé.

La première partie (2) comprend un système de pilotage (3) monté coulissant dans la première chambre (4) sous l'effet de l'injection d'un fluide gazeux sous pression par ledit orifice d'admission (5). Le système de pilotage (3) fait saillie à l'autre extrémité du corps creux (2a), opposée à l'orifice d'admission (5), et est assujetti à un clapet (10). La base du corps creux cylindrique (2a), d'où fait saillie le système de pilotage (3), comprend une protubérance annulaire (13) agencée de manière concentrique par rapport audit système de pilotage (3), et par rapport à la génératrice du corps creux cylindrique (2a).

La deuxième partie (6) du dispositif (1) est accouplée de toute manière appropriée à la première partie (2), et se présente, de la même manière que la première partie (2), sous la forme d'un corps creux (6a), de préférence cylindrique. La deuxième chambre (7) définie à l'intérieur du corps creux (6a) communique, d'une part, avec une capacité de confinement d'un gaz sous pression (non représentée), tel qu'un pneumatique d'une roue d'un véhicule par exemple, et par le biais d'un orifice de gonflage-dégonflage (8) et, d'autre part, avec l'extérieur du dispositif (1) par le biais d'un orifice d'échappement (9). L'orifice d'échappement (9) est ménagé dans l'axe de la génératrice du corps creux cylindrique (2a) de la première partie (2). L'orifice d'échappement (9) est en regard du système de pilotage (3), et permet notamment d'expulser, entre les première et deuxième parties (2, 6), un fluide gazeux provenant de la deuxième chambre (7), et provenant plus particulièrement de la capacité par le biais de l'orifice de gonflage-dégonflage (8).

La deuxième partie (6) comprend un clapet (10) apte à adopter une position de repos dans laquelle il obture l'orifice d'échappement (9), et une position de gonflage-dégonflage, à l'encontre d'un organe élastique de rappel (11), tel qu'un ressort, dans laquelle il libère ledit orifice d'échappement (9).

Le clapet (10) est assujetti au système de pilotage (3), au travers de l'orifice d'échappement (9), de sorte que lorsque le système de pilotage (3) coulisse en direction du clapet (10), ledit clapet (10) est poussé par le système de pilotage (3) et coulissé pour libérer ledit orifice d'échappement (9).

La deuxième partie (6) comprend, sur une face en regard avec la première partie (2), une gorge profilée (14) agencée de manière concentrique à l'orifice d'échappement (9), et en correspondance avec la protubérance annulaire (13) de la première partie (2). Cette gorge profilée (14) comprend un profil transversal en forme de « V ». Cette gorge (14) reçoit une rondelle de protection (12).

La rondelle de protection (12) est en matériau élastomère, et est agencée dans la gorge de réception (14), de manière concentrique à l'orifice d'échappement (9), et en appui sur ladite deuxième partie (6). Plus précisément, la rondelle (12) est agencée dans la deuxième partie (6) de sorte à ce que ladite deuxième partie (6) exerce des appuis circonférentiels aux niveaux des périmètres interne et externe de la rondelle (12). Plus précisément, la zone externe de la gorge (14), à savoir la branche externe du « V » permet de réaliser l'appui circonférentiel externe et, de la même manière, la zone interne de la gorge (14), à savoir la branche interne du « V » permet de réaliser l'appui circonférentiel interne.

Les première et deuxième parties (2, 6) sont agencées de telle sorte que la protubérance annulaire (13) de la première partie (2) est en appui facial contre ladite rondelle de protection (12). De préférence, l'appui est forcé de sorte que la rondelle (12) est contrainte à se déformer élastiquement et notamment à se courber en direction de la deuxième partie (6).

De cette manière, l'orifice d'échappement (9), le système de pilotage (3), et plus généralement l'intérieur du dispositif (1), sont confinés de manière étanche dans un espace défini entre la protubérance annulaire (13) et la rondelle de protection (12).

Cette rondelle (12), en combinaison avec le contact de la protubérance annulaire (13) permet d'assurer l'étanchéité du dispositif (1) et de le protéger contre les projections de boue, d'eau, de poussières ou de tout autre élément indésirable. L'appui forcé entre la rondelle (12) et la protubérance annulaire (13) permet d'optimiser davantage cette étanchéité.

En position de repos, la rondelle (12) se trouve en appui, d'une part, contre la deuxième partie (6) et aux niveaux des périmètres interne et externe de ladite rondelle (12), et, d'autre part, contre la première partie (2) et contre la surface de la rondelle (12) définie entre lesdits périmètres interne et externe.

Lorsqu'il s'agit de dégonfler une capacité connectée au dispositif (1) par l'intermédiaire de l'orifice de gonflage-dégonflage (8), il suffit d'injecter un fluide sous pression par l'orifice d'admission (5). Ce fluide sous pression entraine le coulissement du système de pilotage (3) en direction de la deuxième partie (6). Le coulissement du système de pilotage (3) entraine le coulissement du clapet (10), à l'encontre de l'organe élastique de rappel (11), de manière à libérer l'orifice d'échappement (9). Le fluide sous pression présent dans la capacité s'échappe alors par l'orifice d'échappement (9), et se retrouve dans l'espace défini entre la protubérance annulaire (13) et la rondelle de protection (12). La pression du fluide qui s'échappe contraint la rondelle (12) en matériau élastomère à se déformer élastiquement, et notamment à se courber davantage, pour se libérer de l'appui de la protubérance annulaire (13), et libérer ainsi un passage d'échappement de fluide.

Lors de l'expulsion du fluide sous pression, c'est-à-dire lors du dégonflage d'un pneumatique d'une roue de véhicule par exemple, la rondelle (12) reste plaquée contre la deuxième partie (6) sous l'effet de la force exercée par la pression du fluide qui s'échappe. De cette manière, la rondelle (12) n'entre pas en vibration et ne génère aucune nuisance sonore non désirée.

Par ailleurs, la forme en « V » de la gorge profilée (14) permet de libérer un espace autorisant la rondelle (12) à se déformer élastiquement et se courber en direction de ladite deuxième partie (6). Lorsque la rondelle (12) se courbe, celle-ci ne percute aucune partie de manière violente. Ainsi aucun choc ou bruit violent n'est généré.

Comme il ressort de ce qui précède, l'invention fournit un dispositif (1) de gonflage-dégonflage étanche, et dont la nuisance sonore engendrée par son fonctionnement est diminuée. Un tel dispositif (1) peut, d'une manière avantageuse, équiper des véhicules militaires sans nuire à leur furtivité. Le dispositif (1) selon l'invention est de conception simple, sûre et rationnelle.

## Revendications

1. Dispositif (1) de gonflage-dégonflage automatique d'une capacité de confinement d'un fluide gazeux sous pression, ledit dispositif (1) comprenant :
- une partie (2) comprenant un orifice d'admission (5) d'un fluide gazeux sous pression, et une partie (6) comprenant, un orifice de gonflage-dégonflage (8) destiné à communiquer avec la capacité de confinement, et un orifice d'échappement (9) débouchant entre lesdites deux parties (2, 6) ;
- un système de pilotage à clapet (3, 10) pour des opérations de gonflage-dégonflage en tant que telles ;
- une rondelle élastique (12) montée entre les deux parties (2, 6) et autour de l'orifice d'échappement (9) pour le protéger contre des agents atmosphériques extérieurs ;
***caractérisé en ce que*** l'une des parties (6) comprend des agencements (14) de réception de la rondelle (12) aptes à autoriser ladite rondelle (12) à se déformer élastiquement, sous l'effet d'une pression d'un fluide gazeux s'échappant à travers l'orifice d'échappement (9), pour se libérer d'un appui facial réalisé par une protubérance annulaire (13) que comprend l'autre partie (2), et créer un passage d'échappement de fluide entre ladite protubérance annulaire (13) et ladite rondelle (12).

2. Dispositif (1) de gonflage-dégonflage selon la revendication 1, ***caractérisé* en ce que** les agencements (14) de réception de la rondelle (12) sont aptes à former, d'un premier côté de la rondelle, des zones d'appuis circonférentiels aux niveaux des périmètres interne et externe de ladite rondelle (12).

3. Dispositif (1) de gonflage-dégonflage selon l'une quelconque des revendications précédentes, ***caractérisée* en ce que**, en position de repos de la valve, la protubérance annulaire (13) est en appui forcé contre la rondelle (12), contraignant cette dernière à se déformer élastiquement (6).

4. Dispositif (1) de gonflage-dégonflage selon l'une quelconque des revendications précédentes, ***caractérisé* en ce que** les agencements de réception se présentent sous la forme d'une gorge profilée (14).

5. Dispositif (1) selon la revendication 4, ***caractérisé* en ce que** la gorge (14) comprend un profil transversal en forme de « V ».

## Patentansprüche

1. Vorrichtung (1) zum automatischen Auffüllen und Entleeren eines Einschlussbehälters, in dem ein gasförmiges Medium unter Druck steht, wobei die Vorrichtung (1) umfasst:
- einen Teil (2) mit einer Einlassöffnung (5) für ein unter Druck stehendes, gasförmiges Medium, und einen Teil (6) mit einer Auffüll- und Entleer-Öffnung (8), die mit dem Einschlussbehälter kommuniziert, und eine Ablassöffnung (9), die zwischen den beiden Teilen (2, 6) ausmündet;
- ein Ventil-Steuersystem (3, 10) zum Auffüllen und Entleeren an sich;
- eine elastische Scheibe (12), die zum Schutz gegen atmosphärische Einflüsse zwischen den beiden Teilen (2, 6) und um die Ablassöffnung (9) angeordnet ist, **dadurch gekennzeichnet, dass** eines der Teile (6) Vorkehrungen (14) zur Aufnahme der Scheibe (12) umfasst, welche befähigt sind, der Scheibe (12) zu ermöglichen, sich unter der Wirkung eines Drucks eines gasförmigen Mediums, welches über die Ablassöffnung (9) entweicht, elastisch zu verformen, um sich eines axialen Drucks zu entledigen, welcher durch einen ringförmigen Vorsprung (13) erzeugt wird, der in dem anderen Teil (2) vorhanden ist, und einen Durchlass zum Ablassen des Mediums zwischen dem ringförmigen Vorsprung (13) und der Scheibe (12) zu schaffen.

2. Vorrichtung (1) zum Auffüllen und Entleeren nach Anspruch 1, **dadurch gekennzeichnet, dass** die Vorkehrungen (14) zur Aufnahme der Scheibe (12) befähigt sind, auf einer ersten Seite der Scheibe, am Innen- und Außenumfang der Scheibe (12) umlaufend Druckzonen zu bilden.

3. Vorrichtung (1) zum Auffüllen und Entleeren nach einem der vorhergehenden Ansprüche, **dadurch gekennzeichnet, dass** der ringförmige Vorsprung (13) in Ruhestellung des Ventils gegen die Scheibe (12) gedrückt wird, wodurch letztere gezwungen ist, sich elastisch (6) zu verformen.

4. Vorrichtung (1) zum Auffüllen und Entleeren nach einem der vorhergehenden Ansprüche, **dadurch gekennzeichnet, dass** die Vorkehrungen zur Aufnahme in Form einer Profilnut (14) ausgebildet sind.

5. Vorrichtung (1) nach Anspruch 4, **dadurch gekennzeichnet dass** die Nut (14) ein V-förmiges Querprofil besitzt.

## Claims

1. An inflation/deflation device (1) for automatically inflating/deflating a closed volume for confining a gaseous fluid under pressure, said device (1) comprising:
- a portion (2) provided with an intake orifice (5) for taking in a gaseous fluid under pressure, and a portion (6) provided with an inflation/deflation orifice (8) designed to communicate with the closed volume, and provided with a discharge orifice (9) opening out between the two portions (2, 6);
- a valve member control system (3, 10) for inflation/deflation operations *per se*; and
- an elastically deformable washer (12) mounted between the two portions (2, 6) and around the discharge orifice (9) for protecting it from external atmospheric agents;
**characterized in that** one of the portions (6) is provided with arrangements (14) for receiving the washer (12), that are capable of allowing said washer (12) to deform elastically, under the effect of a pressure of a gaseous fluid discharging through the discharge orifice (9), so as to release face-on abutment created by an annular protuberance (13) provided on the other portion (2), and so as to generate a fluid discharge passage between said annular protuberance (13) and said washer (12).

2. An inflation/deflation device (1) according to claim 1, **characterized in that** the arrangements (14) for receiving the washer (12) are capable of forming, on a first side of the washer, circumferential bearing zones at the inner and outer perimeters of said washer (12).

3. An inflation/deflation device (1) according to any preceding claim, **characterized in that**, when the valve is in the rest position, the protuberance (13) bears in forced manner against the washer (12), thereby constraining said washer to deform elastically.

4. An inflation/deflation device (1) according to any preceding claim, **characterized in that** the washer-receiving arrangements are in the form of a profiled groove (14).

5. A device (1) according to claim 4, **characterized in that** the groove (14) is V-shaped in cross-section.
